(19) Europäisches Patentamt
European Patent Office
Office européen des brevets

(11) **EP 1 559 167 B1**

(12) **EUROPEAN PATENT SPECIFICATION**

(45) Date of publication and mention
of the grant of the patent:
**26.06.2013 Bulletin 2013/26**

(51) Int Cl.:
*H01Q 1/12* (2006.01)     *H01Q 15/00* (2006.01)
*H01Q 15/24* (2006.01)     *B32B 17/10* (2006.01)

(21) Application number: **03809348.0**

(86) International application number:
**PCT/EP2003/050744**

(22) Date of filing: **22.10.2003**

(87) International publication number:
**WO 2004/038855 (06.05.2004 Gazette 2004/19)**

(54) **GLAZING PANEL WITH A RADIATION-REFLECTIVE COATING LAYER**

VERGLASUNGSELEMENT MIT STRAHLUNGSREFLEKTIVER BESCHICHTUNGSSCHICHT

PANNEAU DE VITRAGE COMPRENANT UNE COUCHE DE REVETEMENT D'ENDUIT
REFLECTEUR DE RAYONNEMENT

(84) Designated Contracting States:
**AT BE BG CH CY CZ DE DK EE ES FI FR GB GR
HU IE IT LI LU MC NL PT RO SE SI SK TR**

(30) Priority: **22.10.2002 EP 02079429**

(43) Date of publication of application:
**03.08.2005 Bulletin 2005/31**

(73) Proprietor: **AGC Glass Europe
1170 Bruxelles (Watermael-Boitsfort) (BE)**

(72) Inventor: **ROQUINY, Philippe,
Glaverbel - Centre R & D
B-6040 Jumet (BE)**

(74) Representative: **Schiuma, Daniele Wolfgang et al
Müller-Boré & Partner
Grafinger Strasse 2
81671 München (DE)**

(56) References cited:
**EP-A- 0 717 459     EP-A- 0 726 232
WO-A-00/72634     WO-A-01/68395
WO-A-99/54961     DE-A- 19 830 791
US-A- 2 636 125     US-A- 5 162 145
US-A- 5 620 799**

**Description**

This invention relates to glazing panels and particularly but not exclusively to a vehicle windscreen having a radiation-reflective coating layer provided with a window permeable to electromagnetic radiations.

Although the invention is described herein with particular reference to car windscreens it will be understood that it has applications to other vehicle glazing panels, for example car rear windows and side windows, or train windows.

Coating layers are well known to modify the optical properties of glass, particularly to reduce the proportion of incident solar energy which is transmitted through the glass whilst allowing passage of sufficient visible light to ensure good visibility. This can reduce overheating of the interior of the vehicle in summer and is commonly achieved by reflection of incident solar radiation in the infra-red portion of the spectrum. Infrared reflecting and other radiation-reflective coating layers may increase the selectivity of the glazing panel i.e. the ratio of the proportion of incident visible radiation transmitted through the glazing to the proportion of incident solar energy transmitted through the glazing. Although the invention is described herein with particular reference to infrared reflecting coatings, it will be understood that it is suitable for any radiation-reflective coating layer.

Sensors, emitters or antennas arranged inside a car may rely on passage of electromagnetic waves through the windscreen. For example, passage of an electromagnetic data signal for automatic payment at the toll gates used on the motorways may pass through the windscreen. However, passage of such electromagnetic signals may be hindered by the presence of a radiation-reflective coating and, consequently, a window in the form of a gap or hole may be provided in a radiation-reflective coating layer specifically to allow the passage of electromagnetic radiations through that portion of the glazing. This principle is applicable to allowing passage of any electromagnetic wave through a glazing panel, for example, between an antenna inside the vehicle and a base station, outside the vehicle, which may be, for example, a cellular phone station, a satellite, a television/radio emitter, or a short range communication device, such as a toll connection gate or another vehicle. The term window permeable to electromagnetic radiations as used herein refers to a portion of the surface area of a glazing adapted to permit electromagnetic transmission therethrough. Typical electromagnetic wave frequencies are, for example, 88-108 MHz, 540-1650 kHz, 150-280 kHz for radio signals; 890-960 MHz, 1710-1880 MHz, 1900-2170 MHz, for mobile phone communications; $1575.42 \pm 10$ MHz for GPS; and 5.8 GHz for Dedicated Short Range Communications.

A "transmission ratio" may be evaluated between an antenna and a base station. It quantifies the ratio between the intensity received by the antenna under test (AUT) and the intensity received by the same antenna placed behind a standard uncoated glazing panel, both intensities being evaluated under the same conditions. The standard uncoated glazing panel presents a laminated structure: glass (2.1 mm) / PVB (0.76 mm) / glass (2.1 mm). Therefore the transmission ratio equals 0 dB if the AUT consists of the same antenna placed behind the standard uncoated glazing panel. If the transmission ratio is evaluated in air, i.e. without any obstacle, it will be positive, because the signal is neither reflected nor absorbed by this standard glazing panel. However, if the AUT includes the antenna placed behind an equivalent glazing panel, but comprising a full coating (i.e. without window permeable to electromagnetic radiations), the transmission ratio will reach a strong negative level due to the reflection and absorption properties of the coated glazing.

The transmission ratio is generally evaluated at 0°, i.e. in a direction normal to the plane of the AUT and the plane of the base station antenna. For some applications, the transmission ratio may be evaluated at +35° or -35°, i.e. in directions forming an angle of 35° on both sides of direction 0°, when the AUT is rotated in its azimuthal plane under a constant elevation.

Windows permeable to electromagnetic radiations are known from WO 99/54961, WO 01/68395, WO 00/72634 and US 5620799. WO 99/54961 discloses a vehicle glazing panel comprising a radiation-reflective coating layer and at least a window in the coating layer, permeable to electromagnetic radiations, and adapted to have at least an inside antenna mounted behind it. It describes various configurations for the window permeable to electromagnetic radiations, to reduce the decrease of the transmission ratio. WO 01/68395 and WO 00/72634 disclose vehicle windscreens having an electrically heatable coating layer provided with a data transmission window. This data transmission window is said to allow the passage of electromagnetic waves. US 5620799 provides a glazing which can block some radiations without prejudicing the efficiency of a transmitter/ receiver and discloses a data transmission window.

The purpose of providing a coated glazing panel with a window permeable to electromagnetic radiations has always been to reduce the decrease of the transmission ratio of the signal going through the glazing panel, due to the radiation-reflective coating layer. However, we have surprisingly found that it is possible not only to reduce the decrease of the transmission ratio but also to improve the transmission ratio, compared to the transmission through a windscreen without a coating layer and even, in some cases, to improve it compared to the transmission ratio in air.

The present invention provides a glazing panel as defined in claim 1. The increase of the transmission ratio as expressed in claim 1 is evaluated by comparison with an uncoated glazing panel presenting an equivalent structure, i.e., for example, same thickness of glass, same PVB thickness if the panel is laminated.

This may be used to allow electromagnetic radiations to pass through a coated glazing panel without decreasing the intensity of the radiated signal.

**EP 1 559 167 B1**

In the particular case of a 5.8 GHz circularly polarised wave communication between a base station and an antenna inside a vehicle, for example at an electronic toll gate, the transmission ratio at 0° between the base station and the antenna inside the vehicle may be improved by at least 2 dB, and preferably by at least 5 dB, and the transmission ratio at $\pm 35°$ may stay at the same level or may be improved, compared to the transmission ratios through a glazing panel without a coating layer.

The radiation-reflective coating layer may be a sputtered deposited coating, for example having the general structure antireflective dielectric layer /optional barrier layer / silver containing conductive layer / optional barrier layer / antireflective dielectric layer / optional barrier / silver containing conductive layer / optional barrier layer / antireflective dielectric layer. Such coatings are used in automotive glazings to increase the selectivity of the glazing (i.e. the ratio of the proportion of visible light transmitted to the proportion of incident solar energy transmitted) to reduce the solar heating or greenhouse effect in the vehicle. Alternatively, the coating layer may have a single silver containing layer of the general structure antireflective dielectric layer / optional barrier layer / silver containing conductive layer / optional barrier layer / antireflective dielectric layer. A further possibility is for the coating layer to comprise a pyrolytically deposited layer based, for example on doped tin oxide.

The radiation-reflective coating layer may be sandwiched between two sheets of glass or it may be an exposed coating layer, for example on a monolithic glazing panel. The coating layer may be deposited directly on a surface of the glazing or it may be carried on a film, for example a film of PET incorporated in the glazing.

The antenna inside the vehicle is preferably positioned at a distance of at most $\frac{2D^2}{\lambda}$ from the glazing panel, where D is the largest dimension of the inside antenna and $\lambda$ the wavelength of the transmitted electromagnetic wave between the base station and the inside antenna, or the wavelength at which the antenna is adapted to work. In this particular configuration, the glazing panel may act under the physics law of the near-field zone of antennas, and the transmission ratio may be increased.

Several configurations, shapes, designs and sizes of windows permeable to electromagnetic radiations may be suitable according to the present invention.

The window permeable to electromagnetic radiations is a portion of the windscreen wherein the coating layer is absent from a pattern of dots. These dots form uncoated apertures in the coating layer. The window permeable to electromagnetic radiations may be entirely surrounded by the coating layer or may be bounded to the edge of the glazing panel where no coating layer is present and thus be partially surrounded by the radiation-reflective coating layer.

The glazing panel may comprise several windows permeable to electromagnetic radiations. This allows several antennas, sensors or emitters to be placed behind the glazing panel, inside the vehicle. Furthermore, windscreens may be provided with at least two windows positioned symmetrically on both sides of an axis $Y_0$ which divides the glazing panel along its largest dimension in two equal parts, so as to be mounted indifferently on cars fitted for left-hand drive or righthand drive.

The window permeable to electromagnetic radiations has a size and shape such that at least a square of 5.5 x 5.5 cm$^2$ may be inscribed in it

Where the window permeable to electromagnetic radiations is a portion of the windscreen wherein the coating layer is absent from a pattern of dots, the dots are arranged linearly or in alternate rows. Preferably, the dots have substantially the same size. Such a pattern may be particularly favourable to the increase of the transmission ratio through the window. Indeed, it has been found that the pattern of dots may increase the directivity of the transmission by focusing the signal, and may also increase the efficiency of the transmission by improving the polarisation, the latter being particularly true when considering circularly polarised waves.

The dots without coating layer have each a diameter of at least 5 mm, preferably between 5 and 7 mm, or still preferably, 6 mm.

The window permeable to electromagnetic radiations comprises at least 50 dots with no coating layer, and preferably at least 64 dots with no coating layer. This may optimise the increase in the transmission ratio, so that the transmission ratio may even be higher than the transmission ratio in air, i.e. without glazing panel to pass through. With 64 dots, a maximum transmission ratio may be reached and there may be no further improvement if further dots are added.

Many radiation-reflective coating layers have the intrinsic property of being electrically heatable. The vehicle glazing panel according to the present invention may indeed be heated to be de-misted or de-iced. It is desired that the heating of the glazing panel be as uniform as possible, avoiding hot spots which may damage the coating layer, and avoiding low temperature zones where a de-icing or de-misting function may be delayed. The particular pattern of dots without coating layer in the window permeable to electromagnetic radiations allow the glazing panel to be heated substantially uniformly, but other shapes and designs of windows are also suitable to obtain a homogeneous heating pattern.

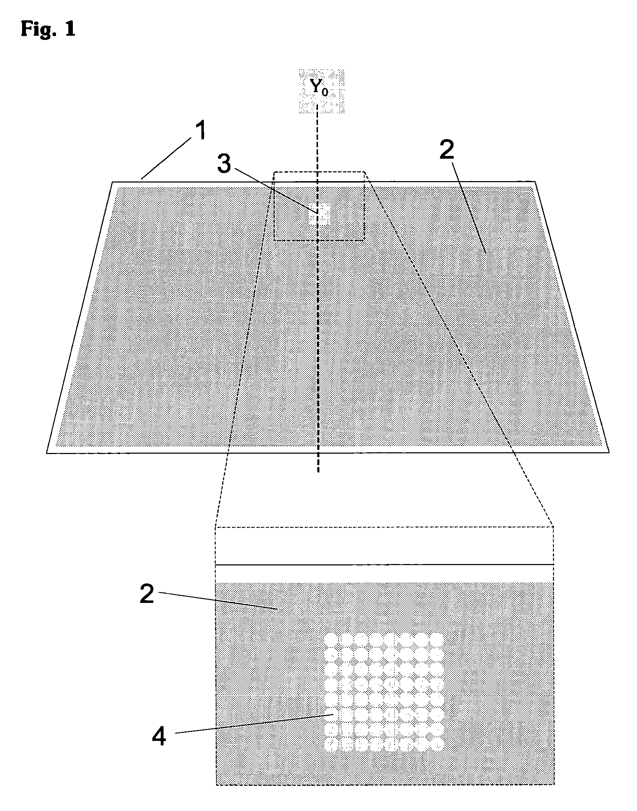

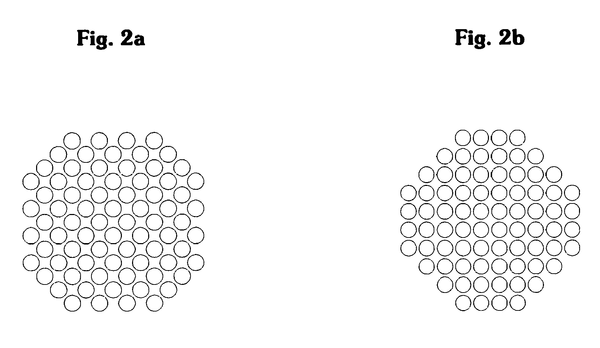

Embodiments of the invention will now be described, by way of examples only, with reference to figures 1 and 2. Figure 1 shows a car windscreen and an enlargement of a portion around the window permeable to electromagnetic radiations. Figure 2 shows other suitable patterns for the window permeable to electromagnetic radiations.

Several transmission ratios have been measured and compared to the transmission ratio through a glazing panel without a coating layer, which served as the reference and to which we gave a value of 0 dB. Results are given in the table below. The electromagnetic waves analysed in this example were all dedicated short range communications at 5.8 GHz as can be found at electronic toll gates on motorways. These are circularly polarised waves. The distance between the antenna inside the vehicle and the glazing panel was in all cases 18 mm, and the largest dimension of the antenna inside the vehicle was approximately 30 mm.

When analysing transmissions at 0°, it shows that when the signal passes through a coated glazing with a window permeable to electromagnetic radiations which is a disk of 50 mm diameter without coating layer or a rectangle of 120 x 70 mm$^2$ without coating layer, the transmission ratio is increased by 2 dB, compared to a signal passing through a glazing without coating layer. Similarly, the transmission is increased by 5 dB, when the signal does not pass through a glazing panel, i.e. in the air. Finally, the transmission ratio is increased by 7 dB when the signal passes through a window permeable to electromagnetic radiations which is a square of 6 x 6 cm$^2$ comprising 64 dots without coating layer of 6 mm diameter each. In this particular embodiment, the transmission ratio is thus better than in the air. As counterexample, the transmission ratio is decreased by 6 dB when the signal passes through a window permeable to electromagnetic radiations which is a square of 6 x 6 cm$^2$ comprising 64 crosses without coating layer of 6 mm long and 1 mm broad. The case of a windscreen with a coating layer which does not comprise a window permeable to electromagnetic radiations is also mentioned in the table: the transmission ratio is in that case decreased by 20 to 40 dB, compared to a windscreen without coating layer.

When analysing transmissions at ±35°, the reference selected is also a glazing panel without coating layer. When the signal passes through a window permeable to electromagnetic radiations which is a square of 6 x 6 cm$^2$ comprising 64 dots without coating layer of 6 mm diameter each, the transmission ratio is at the same level than the reference: it is neither decreased nor increased. Like in the transmission at 0°, the transmission at ±35° is increased by 5 dB, when the signal does not pass through a glazing panel, i.e. in the air. When the signal passes through a coated glazing with a window permeable to electromagnetic radiations which is a rectangle of 120 x 70 mm$^2$ without coating layer, the transmission ratio is increased by 1 dB.

|  | Transmission at 0° | Transmission at ±35° |
|---|---|---|
| Pattern of dots without coating layer | +7 dB | 0 dB |
| No windscreen (air) | +5 dB | +5 dB |
| 120 x 70 mm$^2$ rectangle without coating layer | +2 dB | +1 dB |
| 50 mm disk without coating layer | +2 dB |  |
| **REFERENCE: Windscreen without coating layer** | **0 dB** | **0 dB** |
| Pattern of crosses without coating layer | -6 dB |  |
| Windscreen with IR reflecting coating layer | -20 to -40 dB |  |

Figure 1 shows a car windscreen 1 having a radiation-reflective coating layer 2 and a window permeable to electromagnetic radiations 3. The window permeable to electromagnetic radiations is a square of 6 x 6 cm$^2$ comprising 64 dots without coating layer 4. Each dot has a diameter of 6 mm and is separated from the neighbouring dots by a distance of 1 mm.

Figure 2 shows other suitable patterns for the window permeable to electromagnetic radiations. Figure 2a shows a circular window of 7 cm in diameter comprising 76 dots of 6 mm in diameter, arranged in alternate rows. Figure 2b shows a circular window of 7 cm in diameter comprising 76 dots of 6 mm in diameter, arranged linearly.

## Claims

1.   A vehicle glazing panel (1) comprising
     a radiation-reflective coating layer (2) and
     at least a window (3) in the coating layer (2), permeable to electromagnetic radiations,
     **characterised in that**:

     the window permeable to electromagnetic radiations is a zone wherein the coating layer is absent from a pattern of dots (4), the dots forming uncoated apertures in the coating layer and the dots being arranged linearly or in alternate rows,

the window (3) permeable to electromagnetic radiations is a square of 6x6 cm$^2$ or a circular window of 7 cm diameter;
the window (3) permeable to electromagnetic radiations comprises at least 50 dots with no coating layer; and
the dots without coating layer (4) have each a diameter between 5 and 7 mm,
wherein the window permeable to electromagnetic radiations is adapted to increase the transmission at 0° compared to the transmission through a glazing panel without a coating layer at a frequency of 5.8 GHz.

2. A vehicle glazing panel in accordance with claim 1, **characterized in that** the window permeable to electromagnetic radiations (3) comprises at least 64 dots with no coating layer (4).

3. A vehicle glazing panel in accordance with any preceding claim, which is electrically heatable.

4. A transmission system comprising a vehicle glazing panel (1) in accordance with any preceding claim and at least one inside antenna mounted behind the window (3).

5. A transmission system in accordance with claim 4, **characterized in that** the distance between the position at which the inside antenna is mounted and the glazing panel (1) is at most $\dfrac{2D^2}{\lambda}$, where D is the largest dimension of the inside antenna and $\lambda$ the wavelength to which the antenna is devoted.


**Patentansprüche**

1. Ein Verglasungselement (1) eines Fahrzeugs, das Folgendes umfasst:

   eine Strahlen reflektierende Beschichtungsschicht (2) und
   mindestens ein Fester (3) in der Beschichtungsschicht (2), das für elektromagnetische Strahlungen durchlässig ist,

   **dadurch gekennzeichnet, dass**
   das für elektromagnetische Strahlungen durchlässige Fenster ein Bereich ist, in dem die Beschichtungsschicht aus einem Punktemuster (4) fehlt, wobei die Punkte unbeschichtete Öffnungen in der Bischichtungsschicht bilden und wobei die Punkte linear oder reihenweise versetzt angeordnet sind,
   das für elektromagnetische Strahlungen durchlässige Fester (3) ein Rechteck mit einer Fläche von 6x6 cm$^2$ oder ein kreisförmiges Fenster mit einem Durchmesser von 7 cm ist;
   das für elektromagnetische Strahlungen durchlässige Fester (3) mindestens 50 Punkte ohne Beschichtungsschicht umfasst; und dass
   die Punkte ohne Beschichtungsschicht (4) jeweils einen Durchmesser zwischen 5 und 7 mm aufweisen,
   wobei das für elektromagnetische Strahlungen durchlässige Fester dazu angepasst ist, die Transmission bei 0° im Vergleich zur Transmission durch ein Verglasungselement ohne Beschichtungsschicht bei einer Frequenz von 5.8 GHz zu erhöhen.

2. Ein Verglasungselement eines Fahrzeugs nach Anspruch 1, **dadurch gekennzeichnet, dass** das für elektromagnetische Strahlungen durchlässige Fester (3) mindestens 64 Punkte ohne Beschichtungsschicht (4) umfasst.

3. Ein Verglasungselement eines Fahrzeugs nach einem der vorhergehenden Ansprüche, das elektrisch geheizt werden kann.

4. Ein Transmissionssystem, das ein Verglasungselement (1) eines Fahrzeugs umfasst, nach einem der vorhergehenden Ansprüche, und das mindestens eine Innen-Antenne umfasst, die hinter dem Fenster (3) montiert wird.

5. Ein Transmissionssystem nach Anspruch 4, **dadurch gekennzeichnet, dass** der Abstand zwischen der Stelle, an der die Innen-Antenne montiert wird und dem Verglasungselement (1) maximal $\dfrac{2D^2}{\lambda}$ beträgt, wobei D die größte Abmessung der Innen-Antenne darstellt und $\lambda$ die Wellenlänge darstellt, der die Antenne gewidmet ist.

**Revendications**

1. Un panneau de vitrage (1) pour véhicule, comprenant une couche de revêtement réfléchissant les rayonnements (2) et
au moins une fenêtre (3) dans la couche de revêtement (2) perméable aux radiations électromagnétiques, **caractérisé en ce que** :

   la fenêtre perméable aux radiations électromagnétiques est une zone dans laquelle la couche de revêtement est absente d'une conformation de points (4), les points formant des ouvertures sans revêtement dans la couche de revêtement et les points étant disposés de façon linéaire ou en rangs alternés,
   la fenêtre (3) perméable aux radiations électromagnétiques est un carré de 6x6 cm$^2$ ou bien une fenêtre circulaire présentant un diamètre de 7 cm ;
   la fenêtre (3) perméable aux radiations électromagnétiques comprend au moins 50 points sans couche de revêtement ; et
   les points sans couche de revêtement (4) présentent respectivement un diamètre entre 5 et 7 mm,
   sachant que la fenêtre perméable aux radiations électromagnétiques est adaptée de manière à accroître la transmission à 0° en comparaison avec la transmission à travers un panneau de vitrage sans une couche de revêtement à une fréquence de 5.8 GHz.

2. Un panneau de vitrage pour véhicule d'après la revendication 1, **caractérisé en ce que** la fenêtre perméable aux radiations électromagnétiques (3) comprend au moins 64 points sans couche de revêtement (4).

3. Un panneau de vitrage pour véhicule d'après une des revendications précédentes, qui peut être chauffé électriquement.

4. Un système de transmission comprenant un panneau de vitrage (1) pour véhicule d'après une des revendications précédentes et au moins une antenne intérieure montée derrière la fenêtre (3).

5. Un système de transmission d'après la revendication 4, **caractérisé en ce que** la distance entre la position à laquelle l'antenne intérieure est montée et le panneau de vitrage (1) comporte tout au plus $\dfrac{2D^2}{\lambda}$, sachant que D est la dimension la plus grande de l'antenne intérieure et que $\lambda$ est la longueur d'onde à laquelle l'antenne est dévouée.

EP 1 559 167 B1

**Fig. 1**

Y₀

1

3

2

2

4

7

## Fig. 2a

## Fig. 2b

**EP 1 559 167 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9954961 A
- WO 0168395 A
- WO 0072634 A
- US 5620799 A